# EUROPÄISCHE PATENTSCHRIFT

(11) **EP 2 556 975 B1**
(45) Veröffentlichungstag und Bekanntmachung des Hinweises auf die Patenterteilung: **23.04.2014**
(21) Anmeldenummer: 12179645.2
(22) Anmeldetag: 08.08.2012
(51) Int. Cl.: B60J 7/10, B60J 5/06

(54) **Betätigungsvorrichtung zum Schließen und Spannen einer Plane und Nutzfahrzeugaufbau mit einer derartigen Betätigungsvorrichtung**
Actuating device for closing and tensioning an awning and commercial vehicle with such an actuating device
Dispositif d'actionnement destiné à fermer et tendre une bâche et montage de véhicule utilitaire avec un tel dispositif d'actionnement

(30) Priorität: 11.08.2011 DE 102011052581
(43) Veröffentlichungstag der Anmeldung: 13.02.2013
(73) Patentinhaber: Kögel Trailer GmbH & Co. KG, 89349 Burtenbach (DE)
(72) Erfinder: Kreis, Reinhard, 89356 Haldenwang/Konzenberg (DE)
(74) Vertreter: Kilchert, Jochen

(56) Entgegenhaltungen:
- EP-B1- 0 825 049
- WO-A1-2008/138059

## Beschreibung

Die Erfindung betrifft eine Betätigungsvorrichtung zum Schließen und Spannen einer Plane, insbesondere einer Plane eines Nutzfahrzeugaufbaus, sowie einen Nutzfahrzeugaufbau mit einer derartigen Betätigungsvorrichtung. Eine Betätigungsvorrichtung der eingangs genannten Art ist beispielsweise aus EP 0 825 049 B1 oder aus WO 2008/138059 bekannt.

EP 0 825 049 B1 offenbart einen mehrgelenkigen Mechanismus zum Drehen einer Welle, wobei die Welle mit Haken ausgestattet ist. Die Haken dienen dazu, in entsprechende Ösen einer Plane eines Sattelaufliegers einzugreifen. Durch die Drehbewegung der Welle wird die Plane gespannt. Die Welle ist durch eine Doppelschwinge mit einem Handhebel verbunden. Die Doppelschwinge umfasst eine erste Schwinge, die mit der Welle gekoppelt ist, und eine zweite Schwinge, die mit dem Handhebel verbunden ist. Die erste Schwinge und die zweite Schwinge sind über ein Koppelglied miteinander verbunden.

Die bekannte Betätigungsvorrichtung weist den Nachteil auf, dass einerseits ein vergleichsweise großer Bauraum erforderlich ist, um den Handhebel betätigen zu können. Andererseits erfordert die Handbetätigung einen relativ großen Kraftaufwand, um die Plane zu spannen.

Die Aufgabe der Erfindung besteht darin, eine Betätigungsvorrichtung zum Schließen und Spannen einer Plane eines Nutzfahrzeugaufbaus anzugeben, die mit einem möglichst geringen Kraftaufwand betätigbar ist und eine kompakte Bauweise aufweist. Eine weitere Aufgabe der Erfindung besteht darin, einen Nutzfahrzeugaufbau mit einer derartigen Betätigungsvorrichtung anzugeben.

Erfindungsgemäß wird diese Aufgabe im Hinblick auf die Betätigungsvorrichtung durch den Gegenstand des Patentanspruchs 1 und im Hinblick auf den Nutzfahrzeugaufbau durch den Gegenstand des Patentanspruchs 10 gelöst.

Die Erfindung beruht auf dem Gedanken, eine Betätigungsvorrichtung zum Schließen und Spannen einer Plane, insbesondere einer Plane eines Nutzfahrzeugaufbaus, mit einer Spanneinrichtung zum Greifen und Spannen der Plane und einer Doppelschwinge anzugeben. Die Spanneinrichtung weist eine Welle auf. Die Doppelschwinge umfasst eine erste Schwinge, die mit der Welle drehfest verbunden ist, und eine zweite Schwinge, die durch ein erstes Koppelglied mit der ersten Schwinge verbunden ist. Die zweite Schwinge ist durch ein zweites Koppelglied mit einem Linearantrieb verbunden, so dass eine Linearbewegung des Linearantriebs durch die Doppelschwinge in eine Rotationsbewegung der Welle umwandelbar ist.

Durch die Verwendung eines Linearantriebs werden erfindungsgemäß zwei Vorteile erreicht. Einerseits ermöglicht der Linearantrieb das Schließen und Spannen der Plane eines Nutzfahrzeugaufbaus mit einem geringen Kraftaufwand. Insbesondere kann durch den Linearantrieb der Schließ- und Spannvorgang signifikant beschleunigt werden. Andererseits ist durch die Verwendung eines Linearantriebs gewährleistet, dass die Betätigungsvorrichtung insgesamt einen relativ kleinen Bauraum einnimmt. Die Betätigungsvorrichtung ist daher sehr kompakt und eignet sich insbesondere auch zur Nachrüstung an bestehenden Nutzfahrzeugaufbauten. Durch geeignete Auslegung der Doppelschwinge, insbesondere der Hebellängen, kann der Kraftaufwand, der zur Drehung der Welle erforderlich ist, eingestellt und somit die Effizienz des Schließ- und Spannvorganges verbessert werden. Durch die Doppelschwinge wird die Linearbewegung des Linearantriebs einfach und mit geringem Raumbedarf in eine Rotationsbewegung der Welle umgesetzt. Dabei ist die Welle vorzugsweise in oder an einem Außenrahmen des Nutzfahrzeugs drehbar lagerbar.

Gemäß einer bevorzugten Ausführungsform der erfindungsgemäßen Betätigungsvorrichtung weist die erste Schwinge eine Rotationsachse auf, die mit einer Rotationsachse der Welle fluchtet. Die erste Schwinge kann also an derselben Lagerstelle wie die Welle drehbar gelagert sein. Dadurch wird eine Rotation der ersten Schwinge direkt in eine Rotation der Welle umgesetzt.

Die zweite Schwinge kann eine erste Koppelstelle und eine zweite Koppelstelle aufweisen, wobei die zweite Schwinge an der ersten Koppelstelle mit dem ersten Koppelglied und an der zweiten Koppelstelle mit dem zweiten Koppelglied gelenkig verbunden ist. Die zweite Schwinge kann ferner eine Rotationsachse aufweisen, die zwischen der ersten Koppelstelle und der zweiten Koppelstelle angeordnet ist. Die zweite Schwinge bildet somit einen Hebel, der im Wesentlichen eine Bewegung des zweiten Koppelglieds in eine gegenläufige Bewegung des ersten Koppelglieds überträgt.

Der Abstand zwischen der ersten Koppelstelle und der Rotationsachse ist vorzugsweise größer als der Abstand zwischen der zweiten Koppelstelle und der Rotationsachse. Damit wird erreicht, dass eine relativ kleine Bewegung des zweiten Koppelglieds bzw. allgemein des Linearantriebs zu einer relativ größeren Bewegung des ersten Koppelglieds führt. Insgesamt kann also durch einen geringen Hub des Linearantriebs eine relativ große Rotation der Welle erreicht werden. Dies trägt zu einer kompakten Baugröße der Betätigungsvorrichtung bei.

Der Linearantrieb kann einen pneumatischen Antrieb oder einen elektrischen Antrieb oder einen hydraulischen Antrieb umfassen. Derartige Antriebe sind einfach fernsteuerbar. Insbesondere beim Einsatz mehrerer Betätigungsvorrichtungen kann auf diese Weise das Schließen und Spannen der Plane beschleunigt werden.

Der Linearantrieb kann in vorteilhafter Weise einen Federspeicher aufweisen. Der Federspeicher dient als Sicherung, die verhindert, dass die Welle selbsttätig in eine Öffnungsstellung gedreht wird. Ein versehentliches Öffnen der Plane oder Lockern der Planenspannung wird somit verhindert. Der Federspeicher ist vorzugsweise in der Schließ- bzw. Spannstellung der Welle entlastet. In der Öffnungsstellung der Welle ist der Federspeicher hingegen gespannt, so dass bei einer Fehlfunktion des Linearantriebs der Federspeicher aktiviert und die Welle in die Schließ- bzw. Spannstellung überführt bzw. in der Schließ- und Spannstellung gehalten wird.

Der Linearantrieb weist in einer bevorzugten Ausführungsform der erfindungsgemäßen Betätigungsvorrichtung einen Gabelkopf auf, der mit dem zweiten Koppelglied gelenkig verbunden ist. Der Gabelkopf ermöglicht eine flexible Verbindung zwischen dem Linearantrieb und dem zweiten Koppelglied, so dass ein Verkanten des Linearantriebs vermieden wird.

Die Spanneinrichtung kann wenigstens einen Fanghaken oder wenigstens einen paddelartigen Fortsatz aufweisen, der mit der Welle drehfest verbunden und zum Eingriff in eine Plane oder einen Planenspanner angepasst ist. Der Fanghaken bzw. der paddelartige Fortsatz ermöglicht eine einfache und sichere temporäre Verbindung zwischen der Plane und der Betätigungseinrichtung. Somit ist die Betätigungseinrichtung einfach und effizient zum Schließen und Spannen einer Plane geeignet.

Gemäß einem nebengeordneten Aspekt beruht die Erfindung auf dem Gedanken, einen Nutzfahrzeugaufbau mit einer zuvor beschriebenen Betätigungsvorrichtung anzugeben. Vorzugsweise ist die Betätigungsvorrichtung unterhalb einer Ladefläche des Nutzfahrzeugaufbaus angeordnet. Die erste Schwinge und die zweite Schwinge sind vorteilhafterweise mit jeweils einer Lagerstelle drehbar am Nutzfahrzeugaufbau angelenkt. Es ist auch möglich, dass die erste Schwinge und die zweite Schwinge, im Allgemeinen die Doppelschwinge, in einem Gehäuse drehbar gelagert sind, wobei das Gehäuse mit dem Nutzfahrzeugaufbau verbindbar ist. Insbesondere kann das Gehäuse unterhalb einer Ladefläche des Nutzfahrzeugaufbaus angeordnet sein.

Die Erfindung wird im Folgenden anhand von Ausführungsbeispielen unter Bezugnahme auf die beigefügten schematischen Zeichnungen näher erläutert. Darin zeigen
- Fig. 1: einen Teilschnitt durch einen Nutzfahrzeugaufbau mit der erfindungsgemäßen Betätigungsvorrichtung nach einem bevorzugten Ausführungsbeispiel;
- Fig. 2, 4, 6, 8: jeweils eine perspektivische Ansicht der erfindungsgemäßen Betätigungsvorrichtung gemäß Fig. 1 mit unterschiedlichen Stellungen des Fortsatzes an der Welle; und
- Fig. 3, 5, 7, 9: jeweils einen Teilquerschnitt durch einen Nutzfahrzeugaufbau mit der Betätigungsvorrichtung gemäß Fig. 1 in unterschiedlichen Betätigungsstadien.

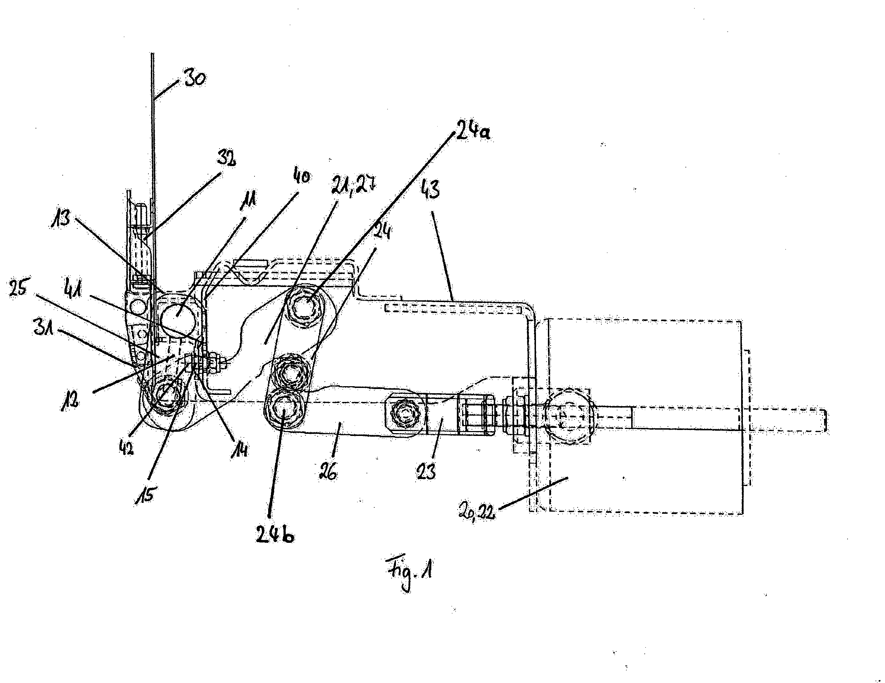

Der Teilquerschnitt gemäß Fig. 1 zeigt einen Außenrahmen 40 des Nutzfahrzeugaufbaus, der durch ein mehrfach abgekantetes Profilelement gebildet ist. Der Außenrahmen 40 weist eine Außenseite 41 auf, die sich vertikal erstreckt. Der Nutzfahrzeugaufbau umfasst ferner eine Plane 30, die mit Spannhaken 31 versehen ist. Die Plane 30 überdeckt die Außenseite 41 und kann sowohl in Längsrichtung (horizontal) als auch in Höhenrichtung (vertikal) gespannt werden. Die Spannhaken 31 sind durch eine Gewindestange 32 mit der Plane 30 verbunden. Auf diese Weise kann die Position der Spannhaken 31 eingestellt werden, beispielsweise um Fertigungstoleranzen auszugleichen.

Die Spannhaken 31 entsprechen im Wesentlichen standardisierten Spannhaken für Planenfahrzeuge, wobei die Spannhaken angepasst sind, um in den Außenrahmen 40 des Nutzfahrzeugs bzw. Nutzfahrzeugaufbaus einzugreifen. Die Spannhaken 31 umfassen entsprechende Spannhebel, durch die die Plane in der Verschlussstellung gespannt werden kann.

Nutzfahrzeuge bzw. Nutzfahrzeugaufbauten, insbesondere Sattelauflieger, die eine Plane 30, insbesondere eine Seitenplane, umfassen, weisen auf jeder Seite mehrere Spannhaken 31 auf. Bei Sattelaufliegern können beispielsweise pro Fahrzeugseite 18 Spannhaken 31, also insgesamt 36 Spannhaken 31 vorgesehen sein. Grundsätzlich ist auch eine andere Anzahl von Spannhaken 31 pro Fahrzeugseite möglich. Mit anderen Worten ist die Anzahl an Spannhaken 31 variabel.

Zum Öffnen oder Verschließen der Plane 30 bzw. der durch die Plane 30 überdeckten Zugangsöffnung zu einem Laderaum des Nutzfahrzeugaufbaus sind die einzelnen Spannhaken 31 einzeln zu betätigen. Dies führt zu einem erhöhten Zeitaufwand.

Die erfindungsgemäße Betätigungsvorrichtung 20 reduziert den Zeitaufwand, da die Betätigung mehrerer Spannhaken 31 gleichzeitig und automatisiert erfolgt. Die Betätigungsvorrichtung 20 ist derart konstruiert, dass sie einfach an bestehenden Nutzfahrzeugaufbauten nachrüstbar ist. Die Betätigungsvorrichtung 20 ist mit einer Spanneinrichtung verbindbar, die eine Welle 11 aufweist. Die Welle 11 dient zum Schließen und Spannen der Plane 30. Konkret weist die Welle 11 Greifelemente, insbesondere Fanghaken oder paddelartige Fortsätze 12, auf, die derart angeordnet sind, dass ihre Position mit der Position der Spannhaken 31 korreliert, so dass die vorhandenen Spannhaken 31 weiterhin vorteilhaft genutzt werden.

Der Aufbau der Spanneinrichtung wird im Folgenden näher erläutert:

Die Spanneinrichtung umfasst die Welle 11, die drehbar in einer Wellenaufnahme 13 gelagert ist. Die Wellenaufnahme 13 bildet insbesondere ein Gehäuse, das die Welle 11 zumindest abschnittsweise umschließt bzw. umgreift. Konkret ist vorgesehen, dass das Gehäuse 13 durch ein Profilelement gebildet ist, das wenigstens einen horizontalen Schenkel und einen vertikalen Schenkel umfasst, wobei der horizontale Schenkel im montierten Zustand der Verschlussvorrichtung 10 oberhalb der Welle 11 angeordnet ist. Der vertikale Schenkel erstreckt sich parallel zur Außenseite 41 des Außenrahmens 40. Im Allgemeinen überdeckt das Gehäuse bzw. die Wellenaufnahme 13 die Welle 11 derart, dass die Welle 11 vor Beschädigungen, insbesondere beim Be- und Entladevorgang, geschützt ist. Alternativ kann die Spanneinrichtung bzw. die Welle 11 innerhalb des Außenrahmens 40 gelagert sein.

Die Welle 11 weist wenigstens einen seitlichen Fortsatz 12 auf, der bei dem Ausführungsbeispiel gemäß Fig. 1 im Wesentlichen radial von der Wellenachse ausgeht. Der Fortsatz 12 ist im dargestellten Ausführungsbeispiel klappenartig bzw. paddelartig ausgebildet und einteilig mit der Welle 11 verbunden. Es ist möglich, dass der Fortsatz 12 ein Langloch aufweist, das angepasst ist, um den Spannhaken 31 aufzunehmen. Ferner kann der Fortsatz 12 mehrteilig, insbesondere kettengliedartig, ausgebildet sein. Im Allgemeinen kann der Fortsatz 12 ein separates Bauteil bilden, das mit der Welle 11 fest, insbesondere drehfest verbunden ist. Beispielsweise kann der Fortsatz 12 mit der Welle 11 durch Schweißen oder Schrauben verbunden sein.

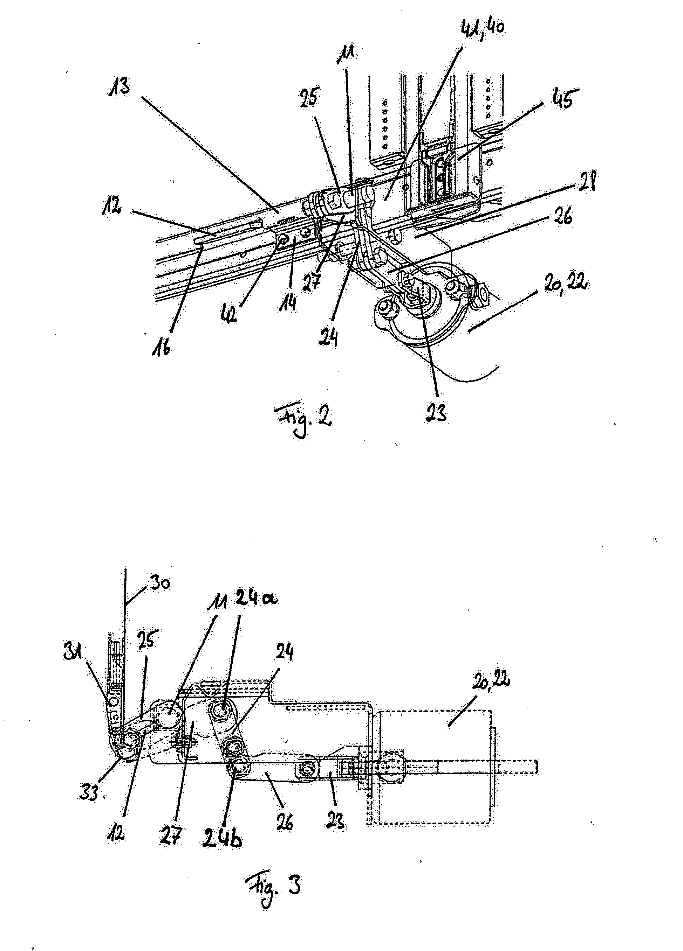

Die Wellenaufnahme 13 weist vorzugsweise mehrere Ausnehmungen 16 auf, durch die sich jeweils ein seitlicher Fortsatz 12 erstreckt (Fig. 2). Im Allgemeinen ist vorgesehen, dass die Welle 11 mehrere Fortsätze 12 aufweist, die in regelmäßigen Abständen entlang der Welle 11 angeordnet sind. Beispielsweise kann die Welle 11 insgesamt fünf Fortsätze 12 umfassen. Eine andere Anzahl von Fortsätzen 12 ist möglich. Die Wellenaufnahme 13 weist eine entsprechende Anzahl von Ausnehmungen 16 auf.

Die Wellenaufnahme 13 weist ferner einen seitlich vorstehenden Flansch 14 auf, der sich im montierten Zustand der Spanneinrichtung vorzugsweise vertikal nach unten erstreckt. Der Flansch 14 kann sich über einen Längenabschnitt der Wellenaufnahme 13 erstrecken. Es ist auch möglich, dass sich der Flansch 14 über die gesamte Länge der Wellenaufnahme 13 erstreckt. Vorzugsweise ist zumindest an den Längsenden der Wellenaufnahme 13 jeweils ein Flansch vorgesehen. Der Flansch 14 weist wenigstens eine, insbesondere zwei, Durchgangsbohrungen 15 auf. Die Durchgangsbohrungen 15 sind zur Aufnahme von Schrauben angepasst, die den Flansch 14 und somit die Wellenaufnahme 13 mit dem Außenrahmen 40 des Nutzfahrzeugaufbaus verbinden. Auf diese Weise kann die Spanneinrichtung einfach an einen bestehenden Außenrahmen 40 eines Nutzfahrzeugaufbaus angebracht werden. Damit ist eine einfache und schnelle Nachrüstbarkeit gewährleistet. Anstelle einer Schraubverbindung kann auch vorgesehen sein, die Spanneinrichtung, insbesondere die Wellenaufnahme 13 mit dem Außenrahmen 40 durch Nieten oder Schweißen zu verbinden. Generell ist vorgesehen, dass die Wellenaufnahme 13 angepasst ist, um an einen bestehenden Außenrahmen 40 nachträglich angebracht zu werden. Eine lösbare Befestigung, beispielsweise durch Schrauben, ist bevorzugt, um die Wartungs- und Reparaturfreundlichkeit zu erhöhen.

Die Betätigungseinrichtung 20 umfasst eine Doppelschwinge 21, die einerseits mit der Welle 11 und andererseits mit einem Linearantrieb 22 gekoppelt ist. Der Linearantrieb 22 kann als pneumatischer oder elektrischer oder hydraulischer Antrieb ausgebildet sein. Der Linearantrieb kann ferner einen Federspeicher umfassen, so dass bei einer Fehlfunktion des Linearantriebs 22 gewährleistet ist, dass die Spanneinrichtung in die Schließstellung überführt bzw. die Schließstellung beibehalten wird.

Der Linearantrieb 22 ermöglicht es, die Baugröße der Betätigungsvorrichtung 20 gering zu halten.

Die Doppelschwinge 21 umfasst eine erste Schwinge 25, die mit der Welle 11 drehfest verbunden ist. Die erste Schwinge 25 ist durch ein erstes Koppelglied 27 mit einer zweiten Schwinge 24 der Doppelschwinge 21 gelenkig verbunden. Die zweite Schwinge 24 ist gelenkig mit einem zweiten Koppelglied 26 verbunden, das zwischen dem Linearantrieb 22 und der zweiten Schwinge 24 angeordnet ist. Konkret weist der Linearantrieb 22 einen Gabelkopf 23 auf, der mit dem zweiten Koppelglied 26 gelenkig gekoppelt ist.

Die Doppelschwinge 21 ist vorzugsweise in einem Mechanikgehäuse 28 angeordnet. Konkret ist vorgesehen, dass die erste Schwinge 25 und die zweite Schwinge 24 jeweils drehbar in dem Mechanikgehäuse 28 gelagert sind. Das Mechanikgehäuse 28 nimmt also die Doppelschwinge 21 vollständig auf und schützt diese vor Verschmutzung und Beschädigung. Insbesondere ermöglicht das Mechanikgehäuse 28 eine einfache Montage der Betätigungsvorrichtung 20 unterhalb eines Ladebodens 43 des Nutzfahrzeugaufbaus. Konkret kann dazu vorgesehen sein, dass das Mechanikgehäuse 28 die gesamte Betätigungsvorrichtung 20, insbesondere den Linearantrieb 22 und die Doppelschwinge 21, aufnimmt.

In den Fig. 2, 4, 6, 8 ist der kinematische Ablauf beim Überführen der Spanneinrichtung in die Schließstellung dargestellt. Die Fig. 3, 5, 7 und 9 zeigen denselben kinematischen Ablauf in einer Teilschnittansicht durch den Nutzfahrzeugaufbau bzw. die Betätigungsvorrichtung 20.

In den Fig. 2 und 3 ist die Spanneinrichtung in einer Öffnungsstellung dargestellt. Der Fortsatz 12 bzw. das Fangpaddel ragt seitlich über die Wellenaufnahme 13 hervor. Insbesondere nimmt der Fortsatz 12 eine annähernd horizontale Stellung ein. Wie in Fig. 3 erkennbar ist, ist die Plane 30 herabgelassen, so dass der Spannhaken 31 seitlich auf Höhe des Außenrahmens 40 angeordnet ist. Der Spannhaken 31 hängt lose auf Höhe des Außerahmens 40. Der nach außen gedrehte Fortsatz 12 ist oberhalb eines Hakenabschnitts 33 des Spannhakens 31 angeordnet. Insbesondere drückt der Fortsatz 12 die Plane 30, die ohne den herausgedrehten Fortsatz 12 direkt an der Wellenaufnahme 13 anliegen würde, seitlich nach außen, so dass der Spannhaken 31, insbesondere der Hakenabschnitt 33 selbsttätig unterhalb des Fortsatzes 12 angeordnet wird.

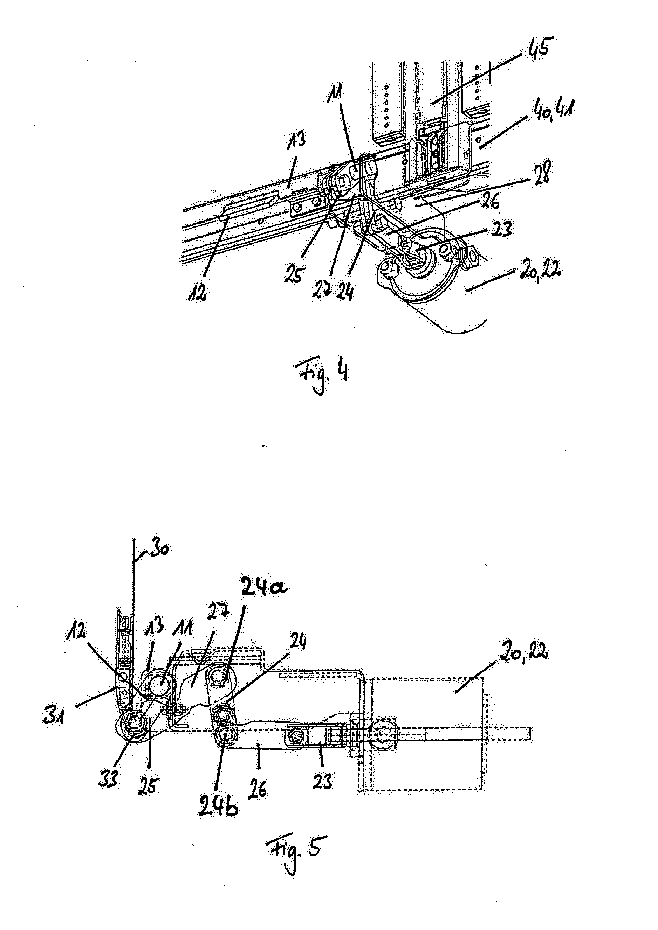

Zum Verschließen bzw. Spannen der Plane 30 wird die Betätigungseinrichtung 20, insbesondere der Linearantrieb 22 betätigt, wodurch der Gabelkopf 23 in Richtung der Welle 11 bzw. der zweiten Schwinge 24 bewegt wird. Dadurch erfolgt eine Rotation der zweiten Schwinge 24, die über das zweite Koppelglied 27 in eine gegenläufige Rotation der ersten Schwinge 25 umgesetzt wird. Auf diese Weise wird der Fortsatz 12 um die Wellenachse der Welle 11 rotiert. Zum Verschließen der Plane 30 rotiert der Fortsatz 12 gemäß der Darstellung in den beigefügten Figuren im Gegenuhrzeigersinn. Der Fortsatz 12 greift dabei in den Hakenabschnitt 33 des Spannhakens 31 ein, wie in Fig. 5 gezeigt ist. Dabei wird der Spannhaken 31 und somit auch die Plane 30 nach unten und gleichzeitig in Richtung des Außenrahmens 40 gezogen.

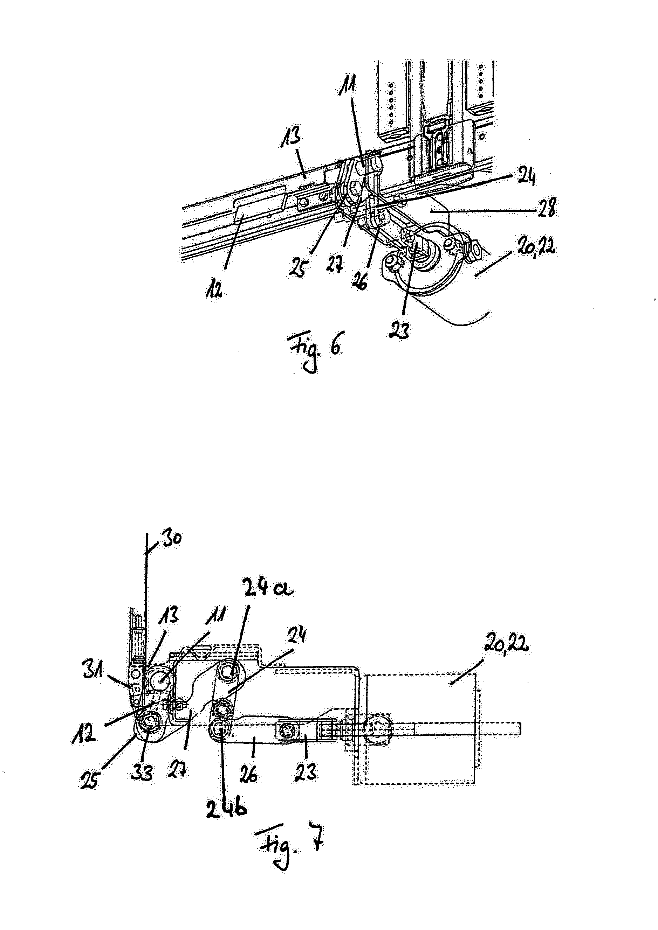

In den Fig. 6 und 7 ist die Betätigungsvorrichtung 20 in einer weiteren Stellung, insbesondere kurz vor dem vollständigen Verschlusszustand, dargestellt. Darin ist zu erkennen, dass der Fortsatz 12 weiter gedreht ist, so dass der Fortsatz 12 im Wesentlichen eine 7-Uhr-Stellung einnimmt. Der Gabelkopf 23 ist gegenüber der vorherigen Stellung, die in den Fig. 4 und 5 dargestellt ist, weiter vom Linearantrieb 22 entfernt. Im Allgemeinen führt der Linearantrieb 22 beim Übergang der Spanneinrichtung, insbesondere des Fortsatzes 12, von einer Öffnungsstellung in die Schließstellung bzw. Spannstellung eine Bewegung aus, die eine nach außen, also in Richtung des Außenrahmens 40 orientierte Richtung aufweist.

In Fig. 7 ist gut erkennbar, dass der Hakenabschnitt 33 des Spannhakens 31 den Fortsatz 12 im Wesentlichen vollständig umgreift. Beim Übergang des Fortsatzes 12 von der Öffnungsstellung in die Schließstellung gelangt der Fortsatz 12 also in Eingriff mit dem Hakenabschnitt 33 des Spannhakens 31.

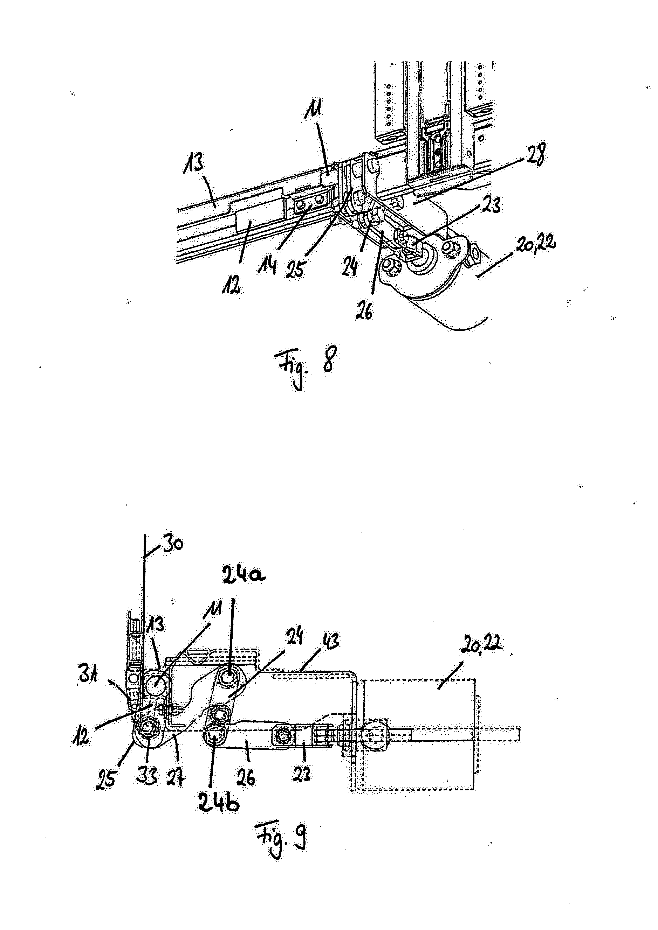

Die Schließstellung der Verschlussvorrichtung 10 bzw. des Fortsatzes 12 ist in den Fig. 8 und 9 gezeigt. In Fig. 8 ist erkennbar, dass der Fortsatz 12 in der Schließstellung nahezu parallel zu der Außenfläche 41 des Außenrahmens 40 angeordnet ist. Dabei wird die maximale Spannung auf die Plane 30 ausgeübt, wie in Fig. 9 erkennbar ist. Die Plane 30 liegt somit bündig an der Wellenaufnahme 13 an.

In Fig. 9 ist überdies die vergleichsweise kompakte Bauform der Betätigungsvorrichtung 20 erkennbar. Insbesondere die Doppelschwinge 21 ist derart ausgebildet, dass sie unter dem Ladeboden 43 des Nutzfahrzeugaufbaus anordenbar ist. Der Außenrahmen 40 weist in diesem Bereich einen Freiraum auf, der ausreicht, um die Betätigungseinrichtung 20 und die Doppelschwinge 21 anzubringen.

Es ist vorteilhaft vorgesehen, dass entlang eines Nutzfahrzeugaufbaus mehrere Betätigungsvorrichtung 20 angeordnet sind. Die Betätigungsvorrichtungen 20 können zumindest elektrisch verbunden sein, um eine zentrale Steuerung der Betätigungseinrichtungen zu ermöglichen. Alternativ kann vorgesehen sein, dass entlang eines Nutzfahrzeugaufbaus, insbesondere entlang einer Seite eines Nutzfahrzeugaufbaus, eine einzige Betätigungsvorrichtung 20 angeordnet ist, die sich über die gesamte Länge des Nutzfahrzeugaufbaus erstreckt.

### Bezugszeichenliste

- 11: Welle
- 12: Fortsatz
- 13: Wellenaufnahme
- 14: Flansch
- 15: Durchgangsbohrung
- 16: Ausnehmung
- 20: Betätigungsvorrichtung
- 21: Doppelschwinge
- 22: Antrieb
- 23: Gabelkopf
- 24: zweite Schwinge
- 24a: erste Koppelstelle
- 24b: zweite Koppelstelle
- 25: erste Schwinge
- 26: zweites Koppelglied
- 27: erstes Koppelglied
- 28: Mechanikgehäuse
- 30: Plane
- 31: Spannhaken
- 32: Gewindestange
- 33: Hakenabschnitt
- 40: Außenrahmen
- 41: Außenseite
- 42: Schraube
- 43: Ladeboden

## Patentansprüche

1. Betätigungsvorrichtung (20) zum Schließen und Spannen einer Plane (30), insbesondere einer Plane (30) eines Nutzfahrzeugaufbaus, mit einer Spanneinrichtung zum Greifen und Spannen der Plane (30) und mit einer Doppelschwinge (21), wobei die Spanneinrichtung eine Welle (11) umfasst und die Doppelschwinge (21) eine erste Schwinge (25), die mit der Welle (11) drehfest verbunden ist, und eine zweite Schwinge (24) aufweist, die durch ein erstes Koppelglied (27) mit der ersten Schwinge (25) verbunden ist,
**dadurch gekennzeichnet, dass**
die zweite Schwinge (24) durch ein zweites Koppelglied (26) mit einem Linearantrieb (22) verbunden ist derart, dass eine Linearbewegung des Linearantriebs (22) durch die Doppelschwinge (21) in eine Rotationsbewegung der Welle (11) umwandelbar ist.

2. Betätigungsvorrichtung nach Anspruch 1,
**dadurch gekennzeichnet,dass**
die erste Schwinge (25) eine Rotationsachse aufweist, die mit einer Rotationsachse der Welle (11) fluchtet.

3. Betätigungsvorrichtung nach Anspruch 2,
**dadurch gekennzeichnet, dass**
die zweite Schwinge (24) eine erste Koppelstelle (24a) und eine zweite Koppelstelle (24b) aufweist, wobei die zweite Schwinge 24 an der ersten Koppelstelle (24a) mit dem ersten Koppelglied (27) und an der zweiten Koppelstelle (24b) mit dem zweiten Koppelglied (26) gelenkig verbunden ist.

4. Betätigungsvorrichtung nach Anspruch 3,
**dadurch gekennzeichnet, dass**
die zweite Schwinge (24) eine Rotationsachse aufweist, die zwischen der ersten Koppelstelle (24a) und der zweiten Koppelstelle (24b) angeordnet ist.

5. Betätigungsvorrichtung nach Anspruch 4,
**dadurch gekennzeichnet, dass**
der Abstand zwischen der ersten Koppelstelle (24a) und der Rotationsachse größer als der Abstand zwischen der zweiten Koppelstelle (24b) und der Rotationsachse ist.

6. Betätigungsvorrichtung nach einem der Ansprüche 1-5,
**dadurch gekennzeichnet, dass**
der Linearantrieb (22) einen pneumatischen Antrieb oder einen elektrischen Antrieb oder einen hydraulischen Antrieb umfasst.

7. Betätigungsvorrichtung nach einem der Ansprüche 1-6,
**dadurch gekennzeichnet, dass**
der Linearantrieb (22) einen Federspeicher umfasst.

8. Betätigungsvorrichtung nach einem der Ansprüche 1-7,
**dadurch gekennzeichnet, dass**
der Linearantrieb (22) einen Gabelkopf (23) aufweist, der mit dem zweiten Koppelglied (26) gelenkig verbunden ist.

9. Betätigungsvorrichtung nach einem der Ansprüche 1-8,
**dadurch gekennzeichnet, dass**
die Spanneinrichtung wenigstens einen Fanghaken oder wenigstens einen paddelartigen Fortsatz (12) aufweist, der mit der Welle (11) drehfest verbunden und zum Eingriff in eine Plane (30) oder einen Planenspanner (31) angepasst ist.

10. Nutzfahrzeugaufbau mit einer Betätigungsvorrichtung (20) nach Anspruch 1, wobei die Betätigungsvorrichtung (20) unterhalb einer Ladefläche (43) des Nutzfahrzeugaufbaus angeordnet ist.

## Claims

1. Actuating apparatus (20) for closing and tensioning a tarpaulin (30), especially a tarpaulin (30) of a utility vehicle superstructure, having a tensioning device for gripping and tensioning the tarpaulin (30) and having a double rocker arm (21), the tensioning device including a shaft (11), and the double rocker arm (21) having a first rocker arm (25), which is connected to the shaft (11) for conjoint rotation therewith, and a second rocker arm (24), which is connected to the first rocker arm (25) by a first coupling member (27),
**characterised in that**
the second rocker arm (24) is connected to a linear drive (22) by a second coupling member (26) in such a way that a linear movement of the linear drive (22) is arranged to be converted into a rotary movement of the shaft (11) by means of the double rocker arm (21).

2. Actuating apparatus according to claim 1,
**characterised in that**
the first rocker arm (25) has an axis of rotation which is aligned with an axis of rotation of the shaft (11).

3. Actuating apparatus according to claim 2,
**characterised in that**
the second rocker arm (24) has a first coupling location (24a) and a second coupling location (24b), the second rocker arm (24) being in articulated connection with the first coupling member (27) at the first coupling location (24a) and with the second coupling member (26) at the second coupling location (24b).

4. Actuating apparatus according to claim 3,
**characterised in that**
the second rocker arm (24) has an axis of rotation which is arranged between the first coupling location (24a) and the second coupling location (24b).

5. Actuating apparatus according to claim 4,
**characterised in that**
the distance between the first coupling location (24a) and the axis of rotation is greater than the distance between the second coupling location (24b) and the axis of rotation.

6. Actuating apparatus according to one of claims 1-5,
**characterised in that**
the linear drive (22) comprises a pneumatic drive or an electrical drive or a hydraulic drive.

7. Actuating apparatus according to one of claims 1-6,
**characterised in that**
the linear drive (22) includes a spring-loading mechanism.

8. Actuating apparatus according to one of claims 1-7,
**characterised in that**
the linear drive (22) has a fork head (23) which is in articulated connection with the second coupling member (26).

9. Actuating apparatus according to one of claims 1-8,
**characterised in that**
the tensioning device has at least one catching hook or at least one paddle-like projection (12) which is connected to the shaft (11) for conjoint rotation therewith and arranged for engagement in a tarpaulin (30) or a tarpaulin tensioner (31).

10. Utility vehicle superstructure having an actuating apparatus (20) according to claim 1, wherein the actuating apparatus (20) is arranged beneath a loading surface (43) of the utility vehicle superstructure.

## Revendications

1. Dispositif d'actionnement (20) destiné à fermer et tendre une bâche (30), en particulier une bâche (30) d'une carrosserie de véhicule utilitaire, avec un dispositif de tension pour la saisie et la tension de la bâche (30) et avec une double bielle (21), le dispositif de tension comportant un arbre (11) et la double bielle (21) présentant une première bielle (25) qui est reliée de manière fixe en rotation à l'arbre (11), et une seconde bielle (24) qui est reliée par un premier organe de couplage (27) à la première bielle (25),
**caractérisé en ce que**
la seconde bielle (24) est reliée par un second organe de couplage (26) à un entraînement linéaire (22) de telle manière qu'un mouvement linéaire de l'entraînement linéaire (22) peut être converti par la double bielle (21) en un mouvement de rotation de l'arbre (11).

2. Dispositif d'actionnement selon la revendication 1,
**caractérisé en ce que**
la première bielle (25) présente un axe de rotation qui s'aligne sur un axe de rotation de l'arbre (11).

3. Dispositif d'actionnement selon la revendication 2,
**caractérisé en ce que**
la seconde bielle (24) présente un premier point de couplage (24a) et un second point de coupage (24b), la seconde bielle (24) étant reliée par articulation sur le premier point de couplage (24a) au premier organe de couplage (27) et sur le second point de couplage (24b) au second organe de couplage (26).

4. Dispositif d'actionnement selon la revendication 3,
**caractérisé en ce que**
la seconde bielle (24) présente un axe de rotation qui est disposé entre le premier point de couplage (24a) et le second point de couplage (24b).

5. Dispositif d'actionnement selon la revendication 4,
**caractérisé en ce que**
la distance entre le premier point de couplage (24a) et l'axe de rotation est supérieure à la distance entre le second point de couplage (24b) et l'axe de rotation.

6. Dispositif d'actionnement selon l'une quelconque des revendications 1 à 5,
**caractérisé en ce que**
l'entraînement linéaire (22) comporte un entraînement pneumatique ou un entraînement électrique ou un entraînement hydraulique.

7. Dispositif d'actionnement selon l'une quelconque des revendications 1 à 6,
**caractérisé en ce que**
l'entraînement linéaire (22) comporte un accumulateur à ressort.

8. Dispositif d'actionnement selon l'une quelconque des revendications 1 à 7,
**caractérisé en ce que**
l'entraînement linéaire (22) présente une tête de fourche (23) qui est reliée par articulation au second organe de couplage (26).

9. Dispositif d'actionnement selon l'une quelconque des revendications 1 à 8,
**caractérisé en ce que**
le dispositif de tension présente au moins un crochet d'arrêt ou au moins un prolongement (12) de type palette qui est relié de manière fixe en rotation à l'arbre (11) et adapté à l'engagement dans une bâche (30) ou un tendeur de bâche (31).

10. Carrosserie de véhicule utilitaire avec un dispositif d'actionnement (20) selon la revendication 1, le dispositif d'actionnement (20) étant disposé sous une surface de chargement (43) de la carrosserie de véhicule utilitaire.
